# EUROPEAN PATENT SPECIFICATION

(11) **EP 3 000 329 B1**
(45) Date of publication and mention of the grant of the patent: **20.06.2018**
(21) Application number: 14800435.1
(22) Date of filing: 19.05.2014
(51) Int. Cl.: A23K 20/158, A23K 50/00

(54) **METHOD FOR PRODUCING PROTECTED COMPOSITIONS FOR ANIMAL FEED**
VERFAHREN ZUR HERSTELLUNG GESCHÜTZTER ZUSAMMENSETZUNGEN FÜR TIERFUTTER
PROCÉDÉ D'OBTENTION DE COMPOSITIONS PROTÉGÉES POUR L'ALIMENTATION ANIMALE

(30) Priority: 20.05.2013 ES 201330724
(43) Date of publication of application: 30.03.2016
(73) Proprietor: Norel, S.A., 28007 Madrid (ES)
(72) Inventor: PABLOS PÉREZ, Enrique, E-28009 Madrid (ES)
(74) Representative: Manuel Illescas y Asociados, S.L.U.
(86) International application number: PCT/ES2014/070408
(87) International publication number: WO 2014/188035

(56) References cited:
- EP-A1- 1 800 546
- EP-A1- 1 983 041
- WO-A2-2004/080197
- WO-A2-2005/108535
- ES-A1- 2 386 474
- ES-A1- 2 386 474
- GB-A- 2 113 521
- GB-A- 2 349 155
- US-A1- 2009 131 702
- US-A1- 2013 034 629

## Description

### FIELD OF THE INVENTION

This invention is related to the agri-food industry, specifically to animal feeding and in particular to monogastric animals. This invention describes the synthesis of a a composition for animal feeding, preferably in monogastric animals, which improves the development of said animals as it is made up of organic acid salts protected with soaps obtained from fatty acids and/or fats, preferably vegetable. Said synthesis method of the present invention is performed in a double reaction.

### STATE OF THE ART

The methods of obtaining soaps for animal feeding have been known for years in the state of the art. Soaps are generally formed from natural fats of animal or vegetable origin, which contain triglycerides which comprise organic acids (fatty acids), which, through a saponification process, in the presence of bases, form salts. On the other hand, soaps can also be obtained from products comprising only, or for the most part, free fatty acids, such as fatty acids distilled with palm oil (PFAD) or of lauric acid. The organic acids which most commonly form part of triglycerides are long-chain fatty acids, such as oleic, stearic, palmitic, mirystic, lauric, linoleic and linolenic. Shorter-chain fatty acids also appear, such as butyric, capric, caprylic, formic, lactic, propionic, valerianic, benzoic and caproic. As appropriate bases for the saponification reaction the inorganic bases of alkaline metals of strong nature are chosen, such as sodium hydroxide or caustic soda, potassium hydroxide or calcium oxide.
The use of organic acids as antibacterials in animal and human nutrition has been long well known. There is a large number of inorganic acids available in animal feeding, almost all of them active against pathogenic bacteria (Salmonella, Escherichia coli, etc.), which can populate or develop in excess, occasionally the animal digestive tract and consequently give rise to diseases linked to it. The action of these organic acids can reduce the pH of the environment where the bacterium is or even penetrate the bacterium breaking the anion-cation balance in its cytoplasm. In this regard, butyric acid, also called butanoic acid, has been tested for several years, observing beneficial effects in several species: swines, birds, ruminants, etc., even fish. Together with acetic and propionic acid, butyric acid belongs to the group of short-chain volatile fatty acids (VFAs). In addition to its bactericidal or bacteriostatic effects, organic acids can also be used as a source of carbohydrates for the animal. Some of these organic acids can be used directly by the animal enterocyctes, improving the bowel condition and the optimum use of nutrients. Therefore, these organic acids are considered promoters of animal growth due to their double function: ensuring health due to their bacterial effects and improving the utilization of food and, therefore, the development and fattening of the animal.

The patent application ES 2386474 A1 discloses additives for animal fed comprising organic acid salts with at least an active principle of plant origin, preferably essential oils, partially protected with fats and/or vegetable oils. These additives are used as promoters for animal growth, organic bactericides and modulators of the immune response. The preferred additive is sodium salt of butyric acid with a combination of the essential oils ginger and piperine partially coated with palm stearin or PFDA calcium soap. This document does not describe any method to obtain said additives.

The patent application GB 2113521 A discloses feedstuffs with anti-bactericidal effect comprising a nutritional material, such as proteins, carbohydrates, mineral, dietary supplement or vitamin, protected by a protective coating of an edible, water-insoluble fatty acid salt. The nutritional material is protected against fermentation in the animal's rumen, and the authors show that cows fed with this feedstuff increase total milk yield and milk fat percentage. This document also discloses two different processes for the production of the feedstuff, depending on the nature of the product required, the preferred equipment and the preferred raw materials. One process forms a dispersion of the nutritional material in an aqueous solution of a water-soluble salt of a fatty acid and then added an aqueous solution comprising an edible-cation, forming an insoluble salt which precipitates as a protective coating of the nutritional material. The second process is performed by dispersing the nutritional material to be protected in a molten fatty acid salt, mixing and cooling the mixture. Both embodiments are different to the process of invention and also the final products obtained thereof. It should be noted that the organic acids, the butyric acid amongst them, are present in liquid form at room temperature, which makes them very difficult to handle due to the bad odor they exhibit and their high corrosiveness and volatility, so it is necessary their transformation into salts for at least improving the drawback of handling them. The salts of organic acids show a positive effect on the animal health, though they still exhibit adverse factors that limit their current use in animal feeding. These drawbacks are mainly the bad odor, specifically in the cases of salts formed from butyric acid and formic acid. In this regard, one of the greatest problems is that butyrate, either sodium or calcium, in its pure form, has a very strong odor, which makes it a product difficult to handle and hardly pleasant for the manufacturers thereof and for inhabitants of the surroundings where the production sites are located. On the other hand, pure butyrate, either of sodium or calcium, is absorbed in more than 90% in the initial part of the intestine, thus reducing its positive effects for not reaching the final parts thereof.
To solve said problems, different presentations of the acids have been developed that show the aforementioned drawbacks, as it is the case of butyric acid, in particular in the form of salts of said acid, microencapsulated salts thereof, wherein the butyric acid salt lies inside a capsule formed by fats and/or vegetable oils, i.e., the salt is coated or encapsulated to thus protect the final product from its bad odor, and on the other hand coat part of the active ingredient, butyric acid and achieve slow release, by isolating it and preventing its absorption in the initial part of the intestine, thus ensuring its growth-promoting and bactericidal action along the whole digestive tract of the animal. However, these coating or encapsulation methods, of the butyric acid salts in particular are very tedious, including several steps to achieve the coating or encapsulation of the organic acid salt. These salts will be found either coated or encapsulated in a saturated fat matrix such as stearin or hydrogenated stearin, subsequently following pearling and/or microencapsulation processes. For these reasons, in recent years a major effort has been made by the animal feeding industry to develop new simpler, more effective and efficacious methods to replace the current methods used in the state of the art.
In this regard, this invention describes a new method of synthesis of compositions for animal feeding, preferably of monogastric animals, in a double reaction, which compositions comprise organic acid salts protected with soaps. Since said salt is protected with soaps rich in fatty acids, preferably of vegetable origin and specifically PFAD (palm oil fatty acids) thanks to its degree of unsaturation, they are more effective in the animal fattening and also improve the digestibility of said fats. In addition to solving the problem of bad odor associated with the organic acids, such as for example butyric and formic acids, through the protection thereof with soaps, the compositions for animal feeding obtained by the method of the invention also achieve a greater energy contribution to the animals fed with said compositions, since the soaps themselves add energy to the feed of said monogastric animals, as they are formed by fatty acids. For obtaining the compositions for animal feeding, this invention describes a synthetic method performed in a double reaction, the composition for animal feeding being obtained in less time and at a lower cost than the methods described in the state of the art.

### DESCRIPTION OF THE INVENTION

### Brief description of the invention

This invention relates to a method for the synthesis of compositions based on organic acid salts protected with soaps, for animal feeding, which is performed by a double reaction in two steps or stages. In the first stage of the double reaction (Stage 1), the specific concentrations of the ingredients necessary for the synthesis of the organic acid salt are added to the machine or reactor. Once said salt is obtained, the specific concentrations of the ingredients necessary to synthesize the soap with which said salt is to be protected are added over the salt obtained (Stage 2). The time employed in the synthesis of the compositions of the invention by this method is about 20-50 minutes, preferably 30 minutes.

For the purpose of this invention, the term "organic acid" relates to compounds containing in their formula one or more carboxylic groups (-COOH), proton generators, which can also have different functional groups, such as hydroxy acids, keto acids, aromatic acids, heterocyclic compounds, as well as amides or lactones. The organic acids used in this invention are preferably volatile fatty acids, preferably of short and middle chain, and from which may be selected: butyric acid, propionic acid, formic acid, lactic acid, citric acid, lauric acid, cupric acid, caprylic acid, caproic acid, acetic acid, amongst others. As organic acids and more particularly butyric acid have an unpleasant odor, with the protection of salts of these acids with the soaps obtained by the methods described in this invention, said unpleasant odor is avoided, further achieving to delay the absorption of the organic acids to the interior of the animals and promoting the animal growth due to their double function: ensuring health due to their bacterial effects and improving the utilization of food and the greater energy contribution and, therefore, the animal development and fattening. In addition, the methods of obtaining the compositions for animal feeding described in this invention are able to save time and cost of the production system thereof.

The salts of said organic acids are selected from any of the list: sodium, calcium, copper or potassium, the sodium and calcium salts being preferred. The ratios in which the organic acid salt is found in the final product obtained by any of the methods described in this invention usually ranges from 10% to 90% of the final product.

For the purpose of this invention, the term "fatty acid" and/or "fat" and/or "vegetable oil" relates to an organic compound obtained from seeds or other parts of the plants in which tissues it builds up as an energy source. The fats and/or vegetable oils used in this invention for obtaining soaps with which the organic acid salt is to be protected preferably consist of palm oil fatty acids (PFAD) or another fatty acid compound which meets the conditions necessary for the reaction (saponification with calcium of fatty acids), which can or cannot be hydrogenated, thus controlling the saturation degree of said fatty acids to obtain a greater yield both in the synthetic method and in the compositions for animal feeding properly obtained.

For the purpose of this invention, the term "protected" and its variants, "protection", "protected", etc, relates to the inclusion of organic acid salts in a soap matrix obtained from fatty acids and/or fats, preferably vegetable, which avoid the fast absorption of organic acid salts by the animal and the strong odor which emit the same. Therefore, said fatty acids and/or vegetable fats are encompassed along with the organic acid salts in a matrix, as mentioned above. Said protection matrix, in addition to avoiding the bad odor produced by the organic acids, preferably by butyric acid, protects said acids from the gastric digestion and therefore allows the action throughout the whole intestinal tract, even up to the most distal parts thereof, of the above mentioned organic acids. The protection rates of the organic acid salts in the matrix provided by the soap depend on the concentrations of the ingredients used for obtaining the soap. For the purpose of this invention, the preferred protection rates of the organic acid salts in the soap matrix vary from preferred ranges from 90-10 wt% of the final product, which are specifically the percentages of soap present in the final additive. The preferred ranges of protection of the organic acid salts with the soaps vary from 30-70% and more preferably from 50-70%.

The soaps which protect the organic acid salts and which make up the additive of the invention are obtained from the mixture comprising the fatty acids and/or vegetable oils and a base or an oxide, said base preferably being sodium hydroxide (NaOH) or caustic soda, and the oxide preferably calcium oxide (CaO). The soaps are preferably calcium, sodium and magnesium soaps, more preferably calcium and sodium. The ratios in which the soap is found in the final product obtained by the method described in this invention usually range from 10% to 90% of the final product, through intermediates of said values are preferred. The compositions for animal feeding obtainable by the method described above, in a double reaction, which comprise salts, preferably sodium and/or calcium salts, of organic acids, protected in different ratios with soaps, preferably sodium and/or calcium, rich in fatty acids or fats of vegetable origin, preferably PFAD, which show a lower saturation degree than animal fats or other fatty substance or are of shorter length and, therefore, more effective in animal fattening due to their better digestibility.

The compositions for animal feeding obtained by the method of the invention exhibit an organic acid salt rate in the final product that can vary from 10-90 wt% and a soap rate in the final product that can vary from 10-90 wt%. Said compositions may form integral part of the animal diet and fulfill the function of improving the daily weight increase of the animals (GDP), as well as the conversion of the ration taken, being able to be added in the food or feed of animals, for example as additives and/or food supplements.

To perform the method described in this invention, any reactor or equipment can be used. In the laboratory, a beaker was used as reactor and a rod as a stirrer. For a large-scale preparation, a blender equipped with mass stirrers and an intensifier turbine, as well as lump crushers, are preferred. Said machine is provided with a sleeve to control the temperature at which the reaction is occurring. The total time of the reaction process following the single reaction method varies from 10-15 minutes and following the double reaction method varies from 20-50 minutes. The composition obtained by the method of the present invention may be used for animal feeding, as promoter of animal growth and/or fattening, preferably in monogastric animals. Food or feed for animal feeding, preferably for monogastric animals, may comprise any of the compositions prepared by the method described in this invention and may comprise other additives and/or supplements.

### Description of the figures

**Figure 1****:** Mean weight (live) per cage of broilers of 0, 21 and 42 days of age per treatment (T1 = control, T2 = control + bacitracin, T3 = control + composition of the invention, T4 = control + bacitracin + composition of the invention).
**Figure 2****:** Mean intake (live) per cage of broilers of 0, 21 and 42 days of age per treatment (T1 = control, T2 = control + bacitracin, T3 = control + composition of the invention, T4 = control + bacitracin + composition of the invention).
**Figure 3****:** Mean daily weight gain (kg) in broilers of 0 - 21, 21 - 42 and 0-42 days of age per treatment (T1 = control, T2 = control + bacitracin, T3 = control + composition of the invention, T4 = control + bacitracin + composition of the invention).
**Figure 4****:** Mean daily feed intake (kg) in broilers of 0 - 21, 21 - 42 and 0 - 42 days of age per treatment (T1 = control, T2 = control + bacitracin, T3 = control + composition of the invention, T4 = control + bacitracin + composition of the invention).
**Figure 5****:** Conversion rate (mean daily feed intake/mean daily weight gain) in broilers of 0 - 21, 21 - 42 and 0-42 days of age per treatment (T1 = control, T2 = control + bacitracin, T3 = control + composition of the invention, T4 = control + bacitracin + composition of the invention).
**Figure 6****:** Mean daily weight gain (kg), mean daily feed intake (kg) and conversion rate (as ratio of mean daily feed intake/mean daily weight gain) in broilers of 0 - 21 days per treatment (T1 = control, T2 = control + bacitracin, T3 = control + composition of the invention, T4 = control + bacitracin + composition of the invention).
**Figure 7****:** Mean daily weight gain (kg), mean daily feed intake (kg) and conversion rate (as ratio of mean daily feed intake/mean daily weight gain) in broilers of 21 - 42 days per treatment (T1 = control, T2 = control + bacitracin, T3 = control + composition of the invention, T4 = control + bacitracin + composition of the invention).
**Figure 8****:** Mean daily weight gain (kg), mean daily feed intake (kg) and conversion rate (as ratio of mean daily feed intake/mean daily weight gain) in broilers of 0 - 42 days per treatment (T1 = control, T2 = control + bacitracin, T3 = control + composition of the invention, T4 = control + bacitracin + composition of the invention).

### Detailed description of the invention

The present invention relates to method of synthesis of compositions for animal feeding based on organic acid salts, protected with soap, in a double reaction, which comprises two stages:
a) Stage 1:
   a.1) Mix in a reactor at least one organic acid in stoichiometric ratio with at least a base or with at least an oxide.
   a.2) Stir the mixture obtained in step a.1).
   a.3) Remove the water resulting in the mixing process until at least a dry organic acid salt is obtained.
b) Stage 2:
   b.1) Add to the organic acid salt obtained in Stage 1 at least one fat and/or at least one fatty acid in stoichiometric ratio with the base(s) or with the oxide(s) of said Stage 1..
   b.2) Stir the mixture obtained in step b.1).
   b.3) Remove the water resulting in the mixing process until at least an organic acid salt protected with at least a soap is obtained.

In a preferred embodiment, the organic acids are selected from any of the list: formic, lactic, propionic, butyric, valerianic, benzoic, caprylic or capric.

In another preferred embodiment, the organic acid salts are selected from any of the following: sodium salt, calcium salt, copper salt and potassium salt, the sodium and calcium salts being preferred.

In another preferred embodiment, the base used is sodium hydroxide and the oxide used is calcium oxide.

In another preferred embodiment, the fatty acids and/or the fats used for the synthesis of the soap are selected from any of the list: fats of animal origin, fats of vegetable origin, synthetic fats or mixture thereof, preferably the fatty acids and/or fats are of vegetable origin and more preferably they are selected from fats consisting of palm oil of fatty acids or lauric acid.
In a preferred embodiment, the double reaction method is characterized in that the mixture obtained in step a.2) of Stage 1 is kept under stirring at a speed of 200-600 rpm for a period from 1 to 15 minutes and at a temperature of 70 to 160 °C.
In a preferred embodiment, the double reaction method is characterized in that in step a.3) of Stage 1 the removal of water is performed by evaporation at at temperature of 80-130 °C, by the vapor vacuum suction system which exhibits the reactor or equipment used.
In a preferred embodiment, the double reaction method is characterized in that the mixture obtained in step b.2) of Stage 2 is kept under stirring at a speed of 1500-3000 rpm for a period from 30 seconds to 10 minutes and at a temperature of 80 to 130 °C.
In a preferred embodiment, the double reaction method is characterized in that in step b.3) of Stage 2 the removal of water is performed by evaporation at a temperature of 80-130 °C, by the vapor vacuum-suction system which exhibits the reactor or equipment used.

In a preferred embodiment, the composition for animal feeding based on the organic acid salt protected with soap obtained is kept for 1-5 minutes under stirring with the intensifier turbines and lump crushers of the reactor working in ranges in the order of 1500-3000 rpm.

In another preferred embodiment, the ratio in the organic acid salts in the composition for animal feeding vary from 10 to 90 wt% of the final product, the ratio that varies from 30-70% being preferred.

In a preferred embodiment, the ratio of the soaps in the composition for animal feeding ranges from 90 to 10 wt% of the final product, the ratio that varies from 70-30% being preferred. In addition, the organic acid salts are protected by the matrix formed by the soaps, the protection ratio being similar to the percentage of soap present in the compositions described in this invention.

In other preferred embodiments, compositions for animal feeding which comprise any of the possible combinations of organic acid salts protected with soap obtained from vegetable fats and/or palm oil fatty acids (PFAD) are synthesized. The following serve as an example of compositions for animal feeding described in this invention: sodium butyrate protected with PFAD sodium soap, calcium butyrate protected with PFAD calcium soap, sodium formate protected with PFAD sodium soap, calcium formate protected with PFAD calcium soap, sodium propionate protected with PFAD sodium soap, calcium propionate protected with PFAD calcium soap, sodium lactate protected with PFAD sodium soap, calcium lactate protected with PFAD calcium soap, sodium valerianate protected with PFAD sodium soap, calcium valerianate protected with PFAD calcium soap, sodium benzoate protected with PFAD sodium soap, calcium benzoate protected with PFAD calcium soap, sodium caprylate protected with PFAD sodium soap and calcium caprylate protected with PFAD calcium soap. The method of this invention allows to obtain a composition for animal feeding which comprises organic acid salts protected with soaps

In another preferred embodiment, the compositions obtained by the method of the invention are characterized in that the fatty acids and fats are fats of vegetable origin, preferably they are fats consisting of palm oil fatty acids (PFAD) or lauric acid.

In a preferred embodiment, the compositions obtained by the method of the invention are characterized in that the organic acid salt is sodium butyrate and the soap is palm oil fatty acid distillate (PFAD) sodium soap. The compositions are characterized in that the ratio of sodium butyrate: palm oil fatty acid distillate sodium soap is between 4:1 and 1:1, preferably between 4:1 and 3:2, and in a preferred embodiment, 7:3.

In another preferred embodiment, the compositions obtained by the method of the invention are characterized in that the animals are monogastric animals. In this invention monogastric animals refer to animals with a single simple stomach, such as birds, swines, carnivorous species such as dogs and cats, and herbivorous such as horses or rabbits. Monogastric animals are preferably birds and/or swines, more preferably birds such as cocks and hens (broilers), ducks, geese, turkeys, pigeons, Guinea fowls, pheasants, quails and ostriches, even more preferably cocks and hens (broilers).

In another preferred embodiment, the compositions obtainable by the method of the invention are characterized in that they comprise any of the possible combinations of protected organic acid salts with soap obtained from vegetable fats and/or palm oil fatty acids (PFAD) The following serve as an example of compositions for animal feeding described in this invention: sodium butyrate protected with PFAD sodium soap, calcium butyrate protected with PFAD calcium soap, sodium formate protected with PFAD sodium soap, calcium formate protected with PFAD calcium soap, sodium propionate protected with PFAD sodium soap, calcium propionate protected with PFAD calcium soap, sodium lactate protected with PFAD sodium soap, calcium lactate protected with PFAD calcium soap, sodium valerianate protected with PFAD sodium soap, calcium valerianate protected with PFAD calcium soap, sodium benzoate protected with PFAD sodium soap, calcium benzoate protected with PFAD calcium soap, sodium caprylate protected with PFAD sodium soap and calcium caprylate protected with PFAD calcium soap. The composition obtainable by the method of the invention may be used for animal feeding, as a promoter of animal growth and/or fattening, preferably monogastric animals. Food or feed for animal feeding, preferably for monogastric animals, may comprise compositions made by the method described in this invention. The food or feed for animal feeding it may comprise other additives and/or supplements. Preferably, the additives and/or supplements comprise any substance or product, including the additives, intended for oral feeding of animals, either if it has been fully or partially transformed or not, and at least a composition obtainable by the method described in the present invention. Said substance or product intended for oral feeding of animals preferably comprises compound feeds (nutritional feeds), antibiotics, vitamins and/or minerals. Said compound feed preferably comprises in a high ratio corn flour, barley, wheat, millet, sorghum, oat, rye and/or soy, and/or mixtures thereof.

Preferably, at least a composition obtainable by the method described in this invention is added to said feed, between 100 g/ton and 100 kg/ton, more preferably between 500 g/ton and 10 kg/ton, even more preferably between 750 g/ton and 2 kg/ton. A composition obtainable by the method described in this invention is added to the feed in an amount of 1 kg/ton. The ratio of said composition in the feed may be modified depending on the age and/or type of monogastric animal being fed.
Preferably the additives and/or supplements comprise a compound feed (nutritional feed), optionally with an antibiotic such as bacitracin, bambermycin, lasalocid, monensin, salinomycin, or virginiamycin or salts thereof. Preferably the antibiotic is zinc bacitracin. Preferably the antibiotics, vitamins and/or minerals are added to the feed in an amount from 10 g/ton and 10 kg/ton, more preferably from 100 g/ton and 1 kg/ton. In an embodiment zinc bacitracin is added to the feed in an amount between 200 g/ton and 1 kg/ton, more preferably 500 g/ton.

Said additives and/or supplements, like the composition obtainable by the method described in this invention, are mixed with a feed using a feed mixer, mill, mass stirrers and/or lump crusher to homogenize the distribution of said composition and optionally said additives and/or supplements in said feed.

The examples described below have as an object to illustrate this invention, but without limiting the scope thereof.

**Example 1.** Industrial process of synthesis of the compositions for animal feeding.

For the obtention, at an industrial scale of the composition for animal feeding which comprise organic acid salts partially protected with soaps, within preferred ranges which vary from 90-10 wt% of the final product, according to the method described in this invention: single reaction method (comparative = not according to the present invention) and/or simultaneous double reaction method, a reactor or machine is used, preferably of horizontal turbulence mixer 1200 (MHT 1200) type fitted with moldboard or plow blades, mass stirrers reaching a speed of 200 to 400 rpm and two intensifier lump crusher turbines reaching a speed of 1500 to 3000 rpm. This reaction is also fitted with a double sleeve containing in an interior thermal oil or more preferably vapor, which reaches a temperature from 80 to 130 °C, a temperature range from 90 to 110 °C being preferred, to perform the reaction.

In addition, the system is fitted with a vacuum mechanism which is achieved preferably by means of a cyclone-aspirator in tail, passing the suctions firstly through a sleeve filter separating the solid parts from the vapors produced by the reaction and secondly the vapor already cleaned from solid products is subject to a heat exchanger by condensation, recovering the water of reaction. Finally, the remaining vapor passes through a gas cleaner of scrubber type, with 25% NaOH solution to neutralize the acid vapors generated.

For the synthesis of the additives by the method of the invention, the work is performed in a closed area at negative pressure, collecting all vapors to be treated avoiding the emission of unpleasant vapors outside. Both the water of reaction and the possible vapor generated are perfectly controlled and cleaned to be reused in the same process or in others.
Therefore, the obtention of the additives described in this invention by the single reaction method (which is comparative) is performed as follows: Firstly, into the same reactor (MHT 1200) are added, simultaneously or with a minimum separation in time, the specific concentration of the organic acid to be used based on the final additive it is desired to obtain and on the fatty acid with which the organic acid salt is to be coated, preferably PFAD is used as fatty acid of vegetable origin, previously melted at an approximate temperature of 60 °C, thus being both ingredients mixed in the same reactor. Then into said reactor the suitable concentration of NaOH or of calcium oxide is added, based on the composition it is desired to obtain, a sodium or calcium salt protected with sodium or calcium soap. Subsequently the vacuum system which will carry away in vapor form the water molecules produced in the synthesis of the composition for animal feeding of the invention is activated. To solve this extraction more immediately, the reactor intensifier turbines are kept operable, between 1500 and 3000 rpm, breaking the possible lumps and releasing at a higher speed the humidity of the particles, aided by the heat of the reaction and the heat of the double sleeve with thermal oil or preferably vapor, between 80 and 130°C. Therefore, a composition for animal feeding which comprises an organic acid salt, at the desired percentage, protected by soap obtained from fatty acids and/or fats of vegetable origin is obtained. Therefore, it is not necessary to wait until the end of the first reaction of obtention of the organic acid salt to then add the mixture of reagents that will comprise the soap. Therefore, the full process is performed in a single reaction, thus reducing the process time, said synthesis time of the composition being about 13 minutes.

For obtaining the compositions for animal feeding by the method of the invention, which is the double reaction method, the following stages are performed:
Firstly, into the same reactor (MHT 1200) the specific concentration of organic acid to be used based on the salt and on the final composition it is desired to obtain are added, and at the same time into this reactor the basic metal compound, either NaOH or calcium oxide, is added to yield the organic acid salt. This mixture is kept under stirring between 1 and 5 minutes, with the moldboard or plow blades at a speed of 200 to 600 rpm and with the intensifier turbines from 1500 to 3000 rpm, thus obtaining the organic acid salt. Once said salt is obtained, the concentration necessary to obtain the desired protection of the salt, the vegetable fatty acids, preferably PFAD , although any other fatty acids of any type of fat may be used, only considering that it would be necessary to know its melting point to obtain a solid product and able to be handled, and sodium hydroxide for the obtention of sodium soaps or calcium oxide and water for the obtention of calcium soaps are added into the reaction compartment where said salt is found suitable. This mixture is maintained under stirring for 1 to 5 minutes with the moldboard or plow blades at a speed of 200 to 600 rpm, the speed of the intensifier turbines being also between 1500 and 3000 rpm. The vacuum system which will carry away in vapor form the water molecules produced in the synthesis of the composition for animal feeding of the invention is then activated. To solve this extraction more immediately, the reactor intensifier turbines are kept operable, between 1500 and 3000 rpm, breaking the possible lumps and releasing at a higher speed the humidity of the particles, aided by the heat of the reaction and the heat of the double sleeve with thermal oil or preferably vapor, between 80 and 130°C. Therefore, a composition for animal feeding which comprises an organic acid salt, at the desired percentage, protected by soap obtained from fatty acids and/or fats of vegetable origin is obtained. The total time of the process of synthesis of the composition of the invention by the double reaction method is between 20 and 70 minutes, the most approximate time being 30 min.
The concentrations of all ingredients used for the synthesis of the different compositions by the single reaction method (which is comparative) or by the double reaction method, are detailed below, in Example 2.

**Example 2.** Concentration range of the ingredients used for the synthesis of the different compositions for animal feeding.

For obtaining the sodium and/or calcium salts of the organic acids described throughout this invention, as well as of the sodium and/or calcium soaps with which said salts are partially protected, the different ratios of each ingredient included in each of the different compositions for animal feeding described in this invention are shown below.

For the synthesis of the sodium salts of organic acids partially protected with sodium soaps, stoichiometric ratios of reagents are used, that is 1 mol of organic acid versus 1 mol of NaOH or caustic soda, thus generating 1 mol of the acid sodium salt and 1 mol of water:

1 mol Butyric ac. + 1 mol NaOH → 1mol sodium butyrate + 1mol water

(CH₃CH₂CH₂COOH) + (NaOH) → (CH₃CH₂CH₂CONa) + (H₂O)

The organic acids used are preferably: butyric, formic, propionic, lactic, valerianic, benzoic and caprylic and the soaps are sodium and/or calcium, preferably of vegetable fats and more preferably of PFAD.

The different ratios of the ingredients for the obtention of the compositions according to the method of the invention formed by sodium and/or calcium salts protected with the sodium and/or calcium salts of PFAD are shown below in table form.
The ratios of sodium and/or calcium salts of the different organic acids in the different compositions vary between 90-10% and the PFAD sodium and/or calcium soaps which protect said salts vary between 10-90%. (See Tables 1-14), respectively on the total of the final product.

**Table 1. Ratios of the ingredients which make up the composition for animal feeding comprising sodium butyrate protected with PFAD sodium soap.**

| %Salt/%Soap | %Butyric ac. | %NaOH | %PFAD | %NaOH |
|---|---|---|---|---|
| 90/10 | 61.87 | 28.13 | 8.07 | 1.93 |
| 80/20 | 55 | 25 | 16.15 | 3.85 |
| 70/30 | 48.12 | 21.88 | 24.22 | 5.78 |
| 60/40 | 41.25 | 18.75 | 32.3 | 7.7 |
| 50/50 | 34.37 | 15.63 | 40.37 | 9.63 |
| 40/60 | 27.5 | 12.5 | 48.45 | 11.55 |
| 30/70 | 20.62 | 9.38 | 56.52 | 13.48 |
| 20/80 | 13.75 | 6.25 | 64.6 | 15.4 |
| 10/90 | 6.87 | 3.13 | 72.67 | 17.33 |

**Table 2. Ratios of the ingredients which make up the composition for animal feeding comprising sodium formate protected with PFAD sodium soap.**

| %Salt/%Soap | %Formic ac. | %NaOH | %PFAD | %NaOH |
|---|---|---|---|---|
| 80/20 | 42.79 | 37.21 | 16.15 | 3.85 |
| 70/30 | 37.44 | 32.56 | 24.22 | 5.78 |
| 60/40 | 32.09 | 27.91 | 32.3 | 7.7 |
| 50/50 | 26.74 | 23.26 | 40.37 | 9.63 |
| 40/60 | 21.4 | 18.6 | 48.45 | 11.55 |
| 30/70 | 16.05 | 13.95 | 56.52 | 13.48 |
| 20/80 | 10.7 | 9.3 | 64.6 | 15.4 |

**Table 3. Ratios of the ingredients which make up the composition for animal feeding comprising sodium propionate protected with PFAD sodium soap.**

| %Salt/%Soap | %Propionic ac. | %NaOH | %PFAD | %NaOH |
|---|---|---|---|---|
| 90/10 | 658.42 | 31.58 | 8.07 | 1.93 |
| 80/20 | 51.93 | 28.07 | 16.15 | 3.85 |
| 70/30 | 45.44 | 24.56 | 24.22 | 5.78 |
| 60/40 | 38.95 | 21.05 | 32.3 | 7.7 |
| 50/50 | 32.46 | 17.54 | 40.37 | 9.63 |
| 40/60 | 25.96 | 14.04 | 48.45 | 11.55 |
| 30/70 | 19.47 | 10.53 | 56.52 | 13.48 |
| 20/80 | 12.98 | 7.02 | 64.6 | 15.4 |
| 10/90 | 6.49 | 3.51 | 72.67 | 17.33 |

**Table 4. Ratios of the ingredients which make up the composition for animal feeding comprising sodium lactate protected with PFAD sodium soap.**

| %Salt/%Soap | %Lactic ac. | %NaOH | %PFAD | %NaOH |
|---|---|---|---|---|
| 90/10 | 62.31 | 27.69 | 8.07 | 1.93 |
| 80/20 | 55.38 | 24.62 | 16.15 | 3.85 |
| 70/30 | 48.46 | 21.54 | 24.22 | 5.78 |
| 60/40 | 41.54 | 18.46 | 32.3 | 7.7 |
| 50/50 | 34.61 | 15.39 | 40.37 | 9.63 |
| 40/60 | 27.69 | 12.31 | 48.45 | 11.55 |
| 30/70 | 20.77 | 9.23 | 56.52 | 13.48 |
| 20/80 | 13.85 | 6.15 | 64.6 | 15.4 |
| 10/90 | 6.92 | 3.08 | 72.67 | 17.33 |

**Table 5. Ratios of the ingredients which make up the composition for animal feeding comprising sodium valerianate protected with PFAD sodium soap.**

| %Salt/%Soap | %Valeric ac. | %NaOH | %PFAD | %NaOH |
|---|---|---|---|---|
| 90/10 | 64.65 | 25.35 | 8.07 | 1.93 |
| 80/20 | 57.46 | 22.54 | 16.45 | 3.85 |
| 70/30 | 50.28 | 19.72 | 24.22 | 5.78 |
| 60/40 | 43.10 | 16.09 | 32.3 | 7.7 |
| 50/50 | 35.91 | 14.09 | 40.37 | 9.63 |
| 40/60 | 28.73 | 11.27 | 48.45 | 11.55 |
| 30/70 | 21.55 | 8.45 | 56.52 | 13.48 |
| 20/80 | 14.37 | 5.63 | 64.6 | 15.4 |
| 10/90 | 7.18 | 2.82 | 72.67 | 17.33 |

**Table 6. Ratios of the ingredients which make up the composition for animal feeding comprising sodium benzoate protected with PFAD sodium soap.**

| %Salt/%Soap | %Benzoic ac. | %NaOH | %PFAD | %NaOH |
|---|---|---|---|---|
| 90/10 | 67.8 | 22.20 | 8.07 | 1.93 |
| 80/20 | 60.26 | 19.74 | 16.15 | 3.85 |
| 70/30 | 52.73 | 17.27 | 24.22 | 5.78 |
| 60/40 | 45.20 | 14.80 | 32.3 | 7.7 |
| 50/50 | 37.66 | 12.34 | 40.37 | 9.63 |
| 40/60 | 30.13 | 9.87 | 48.45 | 11.55 |
| 30/70 | 22.60 | 7.40 | 56.52 | 13.48 |
| 20/80 | 15.07 | 4.93 | 64.6 | 15.4 |
| 10/90 | 7.53 | 2.47 | 72.67 | 17.33 |

**Table 7. Ratios of the ingredients which make up the composition for animal feeding comprising sodium caprylate protected with PFAD sodium soap.**

| %Salt/%Soap | %Caprylic ac. | %NaOH | %PFAD | %NaOH |
|---|---|---|---|---|
| 90/10 | 70.45 | 19.55 | 8.07 | 1.93 |
| 80/20 | 62.62 | 17.38 | 16.15 | 3.85 |
| 70/30 | 54.80 | 15.20 | 24.22 | 5.78 |
| 60/40 | 46.97 | 13.03 | 32.3 | 7.7 |
| 50/50 | 39.14 | 10.86 | 40.37 | 9.63 |
| 40/60 | 31.31 | 8.69 | 48.45 | 11.55 |
| 30/70 | 23.48 | 6.52 | 56.52 | 13.48 |
| 20/80 | 15.66 | 4.34 | 64.6 | 15.4 |
| 10/90 | 7.83 | 2.17 | 72.67 | 17.33 |

For the synthesis of the calcium salts of organic acids partially protected with calcium soaps, stoichiometric ratios of the reagents are also used, that is, 2 moles of organic acid versus 1 mol of calcium oxide, thus generating 1 mol of the calcium salt of the organic acid and 1 mol of water:

2 moles of Butyric ac. + 1 mol CaO → 1 mol calcium butyrate + 1 mol Water

(2 x CH₃CH₂CH₂COOH) + (1 x CaO) → (CH₃CH₂CH₂CO)₂Ca + (H₂O)

**Table 8. Ratios of the ingredients which make up the composition for animal feeding comprising calcium butyrate protected with PFAD sodium soap.**

| %Salt/%Soap | Butyric ac. | CaO | PFAD | Water | CaO |
|---|---|---|---|---|---|
| 90/10 | 68.27 | 21.73 | 7.5 | 1.25 | 1.25 |
| 80/20 | 60.68 | 19.32 | 15 | 2.5 | 2.5 |
| 70/30 | 53.10 | 16.90 | 22.5 | 3.75 | 3.75 |
| 60/40 | 45.51 | 14.49 | 30 | 5 | 5 |
| 50/50 | 37.93 | 12.07 | 37.5 | 6.25 | 6.25 |
| 40/60 | 30.34 | 9.66 | 45 | 7.5 | 7.5 |
| 30/70 | 22.75 | 7.25 | 52.5 | 8.75 | 8.75 |
| 20/80 | 15.17 | 4.83 | 60 | 10 | 10 |
| 10/90 | 7.59 | 2.41 | 67.5 | 11.25 | 11.25 |

**Table 9. Ratios of the ingredients which make up the composition for animal feeding comprising calcium formate protected with PFAD calcium soap.**

| %Salt/%Soap | Formic ac. | CaO | PFAD | Water | CaO |
|---|---|---|---|---|---|
| 80/20 | 49.73 | 30.27 | 15 | 2.5 | 2.5 |
| 70/30 | 43.51 | 26.49 | 22.5 | 3.75 | 3.75 |
| 60/40 | 37.3 | 22.7 | 30 | 5 | 5 |
| 50/50 | 31.08 | 18.92 | 37.5 | 6.25 | 6.25 |
| 40/60 | 24.86 | 15.14 | 45 | 7.5 | 7.5 |
| 30/70 | 18.65 | 11.35 | 52.5 | 8.75 | 8.75 |
| 20/80 | 12.43 | 7.57 | 60 | 10 | 10 |

**Table 10. Ratios of the ingredients which make up the composition for animal feeding comprising calcium propionate protected with PFAD calcium soap.**

| %Salt/%Soap | Propionic ac. | CaO | PFAD | Water | CaO |
|---|---|---|---|---|---|
| 90/10 | 65.3 | 24.7 | 7.5 | 1.25 | 1.25 |
| 80/20 | 58.04 | 21.96 | 15 | 2.5 | 2.5 |
| 70/30 | 50.78 | 19.21 | 22.5 | 3.75 | 3.75 |
| 60/40 | 43.53 | 16.47 | 30 | 5 | 5 |
| 50/50 | 36.27 | 13.73 | 37.5 | 6.25 | 6.25 |
| 40/60 | 29.02 | 10.98 | 45 | 7.5 | 7.5 |
| 30/70 | 21.76 | 8.24 | 52.5 | 8.75 | 8.75 |
| 20/80 | 14.51 | 5.49 | 60 | 10 | 10 |
| 10/90 | 7.25 | 2.75 | 67.5 | 11.25 | 11.25 |

**Table 11. Ratios of the ingredients which make up the composition for animal feeding comprising calcium lactate protected with PFAD calcium soap.**

| %Salt/%Soap | Lactic ac. | CaO | PFAD | Water | CaO |
|---|---|---|---|---|---|
| 90/10 | 68.64 | 21.36 | 7.5 | 1.25 | 1.25 |
| 80/20 | 61.02 | 18.98 | 15 | 2.5 | 2.5 |
| 70/30 | 53.39 | 16.61 | 22.5 | 3.75 | 3.75 |
| 60/40 | 45.76 | 14.24 | 30 | 5 | 5 |
| 50/50 | 38.13 | 11.87 | 37.5 | 6.25 | 6.25 |
| 40/60 | 30.51 | 9.49 | 45 | 7.5 | 7.5 |
| 30/70 | 22.88 | 7.12 | 52.5 | 8.75 | 8.75 |
| 20/80 | 15.25 | 4.75 | 60 | 10 | 10 |
| 10/90 | 7.63 | 2.37 | 67.5 | 11.25 | 11.25 |

**Table 12. Ratios of the ingredients which make up the composition for animal feeding comprising calcium valerate protected with PFAD calcium soap.**

| %Salt/%Soap | Valeric ac. | CaO | PFAD | Water | CaO |
|---|---|---|---|---|---|
| 90/10 | 70.61 | 19.39 | 7.5 | 1.25 | 1.25 |
| 80/20 | 62.77 | 17.23 | 15 | 2.5 | 2.5 |
| 70/30 | 54.92 | 15.08 | 22.5 | 3.75 | 3.75 |
| 60/40 | 47.08 | 12.92 | 30 | 5 | 5 |
| 50/50 | 39.23 | 10.77 | 37.5 | 6.25 | 6.25 |
| 40/60 | 31.38 | 8.62 | 45 | 7.5 | 7.5 |
| 30/70 | 23.54 | 6.46 | 52.5 | 8.75 | 8.75 |
| 20/80 | 15.69 | 4.31 | 60 | 10 | 10 |
| 10/90 | 7.85 | 2.15 | 67.5 | 11.25 | 11.25 |

**Table 13. Ratios of the ingredients which make up the composition for animal feeding comprising calcium benzoate protected with PFAD calcium soap.**

| %Salt/%Soap | Benzoic ac. | CaO | PFAD | Water | CaO |
|---|---|---|---|---|---|
| 90/10 | 73.21 | 16.79 | 7.5 | 1.25 | 1.25 |
| 80/20 | 65.08 | 14.92 | 15 | 2.5 | 2.5 |
| 70/30 | 56.94 | 13.06 | 22.5 | 3.75 | 3.75 |
| 60/40 | 48.81 | 11.19 | 30 | 5 | 5 |
| 50/50 | 40.67 | 9.33 | 37.5 | 6.25 | 6.25 |
| 40/60 | 32.54 | 7.46 | 45 | 7.5 | 7.5 |
| 30/70 | 24.40 | 5.60 | 52.5 | 8.75 | 8.75 |
| 20/80 | 16.27 | 3.73 | 60 | 10 | 10 |
| 10/90 | 8.13 | 1.87 | 67.5 | 11.25 | 11.25 |

**Table 14. Ratios of the ingredients which make up the composition for animal feeding comprising calcium caprylate protected with PFAD calcium soap.**

| %Salt/%Soap | Capyrlic ac. | CaO | PFAD | Water | CaO |
|---|---|---|---|---|---|
| 90/10 | 75.37 | 14.63 | 7.5 | 1.25 | 1.25 |
| 80/20 | 66.99 | 13.01 | 15 | 2.5 | 2.5 |
| 70/30 | 58.62 | 11.38 | 22.5 | 3.75 | 3.75 |
| 60/40 | 50.24 | 9.76 | 30 | 5 | 5 |
| 50/50 | 41.87 | 8.13 | 37.5 | 6.25 | 6.25 |
| 40/60 | 33.50 | 6.50 | 45 | 7.5 | 7.5 |
| 30/70 | 25.12 | 4.88 | 52.5 | 8.75 | 8.75 |
| 20/80 | 16.75 | 3.25 | 60 | 10 | 10 |
| 10/90 | 8.37 | 1.63 | 67.5 | 11.25 | 11.25 |

By way of illustration, the synthesis of a composition for animal feeding is shown below, comprising sodium butyrate protected with PFAD sodium soap, obtained by the single reaction method or the double reaction method, described in this invention. It must be considered that, with any of the two methods, any of the compositions for animal feeding described in this invention can be obtained, taking into account the ratios of the ingredients used, as it is detailed in Tables 1-14 shown above.

**Example 3.** Synthesis of the composition for animal feeding based on sodium butyrate protected with fatty acids distilled with palm oil (PFAD) sodium soap by the consecutive double reaction method.
In the first stage of the consecutive double reaction method in the same reactor (Stage 1), for the synthesis of the composition based on sodium butyrate protected with PFAD sodium soap, the synthesis of sodium butyrate occurs from butyric acid and NaOH by adding the suitable concentrations based on the concentration of salt we desire to be present in the final additive (see Tables1-14). Once sodium butyrate is obtained, stage 2 is performed, which consists in the addition, into the butyrate obtained in stage 1, of the specific concentrations, based on the protection of the salt it is desired to obtain (see Tables 1-14), of NaOH and PFAD. This mixture is kept under stirring until a homogeneous mixture is obtained resulting in one of the compositions described in this invention, sodium butyrate, partially protected with PFAD sodium soap, by the double reaction method.
As it has been detailed above in Example 1, this mixture is kept under stirring for 1 to 5 minutes with the the moldboard or plow blades at a speed between 200 and 600 rpm, the speed of the intensifier turbines being also from 1500 to 3000 rpm. The vacuum system which will carry away in vapor form the water molecules produced in the synthesis of the composition for animal feeding is then activated. To solve this extraction more immediately, the reactor intensifier turbines are kept operable, between 1500 and 3000 rpm, breaking the possible lumps and releasing at a higher speed the humidity of the particles, aided by the heat of the reaction and the heat of the double sleeve with thermal oil or preferably vapor, between 80 and 130 °C.
Following the same method different compositions for animal feeding can be obtained, as described in this invention. In the same way, the ratios of each ingredient to be used for the synthesis of said compositions are described in Tables 1-14.

**Example 4.** Feed manufacture. Experimental diets were isonutritional, covering or exceeding the requirements of the NRC (2012) for broilers of these ages and formulated according to the tables of raw materials FEDNA (Spanish Foundation for the Development of Animal Nutrition).

Broilers between 0 and 21 days of age were administered a starter feed and broilers between 21 and 42 days of age were administered a grower feed (Table 15). The feed will be present as flour and in 25 kg sacs.

**Table 15. Experimental diets 0-21 days (starter) and 21-42 days (grower)**

| **Ingredients %** | **Starter** | **Grower** |
|---|---|---|
| National corn | 33.4 | 31.9 |
| Barley | 20.0 | 23.3 |
| Soy 44% CP | 36.0 | 33.5 |
| Butter | 6.6 | 7.3 |
| L-lysine HCl (78%) | 0.11 | 0.09 |
| DL-methionine 99 | 0.24 | 0.22 |
| L-threonine | 0.10 | 0.08 |
| Calcium carbonate | 1.0 | 1.15 |
| Dicalcium phosphate | 1.71 | 1.61 |
| Sodium chloride | 0.4 | 0.4 |
| Vitamin-mineral corrector¹ | 0.4 | 0.4 |

| **Calculated analysis ²** | | |
|---|---|---|
| AME, Kcal/kg | 3.000 | 3050 |
| Crude protein % | 21.0 | 20.1 |
| Crude fiber % | 3.7 | 3.7 |
| Crude fat % | 8.7 | 9.4 |
| Linoleic acid % | 1.65 | 1.71 |
| Total lysine % | 1.27 | 1.19 |
| Digestible lysine % | 1.1 | 1.03 |
| Total methionine % | 0.55 | 0.51 |
| Digestible methionine % | 0.51 | 0.47 |
| Total Met + Cys % | 0.90 | 0.85 |
| Digestible Met + Cys % | 0.79 | 0.74 |
| Total threonine % | 0.89 | 0.84 |
| Digestible threonine % | 0.75 | 0.70 |
| Total tryptophan % | 0.26 | 0.25 |
| Calcium % | 0.92 | 0.95 |
| Total phosphorus % | 0.69 | 0.66 |
| Phosphorus available % | 0.42 | 0.40 |
| Sodium % | 0.17 | 0.17 |

| | | |
|---|---|---|
| ¹ Supply per kg of diet: 10.000 IU Vit A; 2.500 IU Vit D3; 13.0 mg of Vit E; 3.0 mg of Vit K3; 4.0 mg of Vit B2; 1.25 mg of Vit B6; 7.5 mg of Vit B12; 30 mg of nicotinic acid; 10 mg of pantothenic acid; 2.0 mg of folic acid; 1.5 mg of Vit B1; 0.01 mg of biotin; 325 mg of choline; 0.93 mg of iodine; 500 mg of methionine; 32 mg of iron; 64 mg of manganese; 32.5 mg of magnesium; 0.02 mg of selenium; 45 mg of zinc; 6.25 mg of copper. ² Based on FEDNA values (1999). | | |

The test was based on the administration of 4 experimental treatments according to the scheme of Table 16:

**Table 16. Treatments 1 - 4 (T1 - T4) based on the starter and grower feeds.**

| **Period** | **Treatment 1** | **Treatment 2** | **Treatment 3** | **Treatment 4** |
|---|---|---|---|---|
| **Starter (0-21d)** | Control starter feed | Control feed + zinc bacitracin (500 g/Tm) | Control feed + composition of the invention (1 kg/Tm) | Control feed + bacitracin (500 g/Tm) +invention (1 kg/Tm) |
| **Grower (21-42d)** | Control grower feed | Control feed + zinc bacitracin (500 g/Tm) | Control feed + composition of the invention (0.5 kg/Tm) | Control feed + bacitracin (500 g/Tm) +invention (0.5 kg/Tm) |

Each treatment (T2 - T4) was manufactured in a feed mixer, through mixing each feed, starter or control, with zinc bacitracin (bacitrac) and/or with a composition obtained by the method of the invention, specifically the composition of the invention (invention) [a composition of sodium butyrate: 70% and sodium salt of PFAD (Palm Fatty Acid Distillate): 30%]. Bacitracin was diluted to 10% and was added gradually at 500 g/ton. The composition of the invention was added to the starter at 1 kg/ton, and to the grower at 0.5 kg/ton.

The next control was performed as analysis of the feeds: samples of all treatments T1 - T4 were taken (based on starter and grower) and were analyzed at the Laboratorios Tecnologicos OZER from Leon, crude protein, crude fiber, humidity, crude fat and ashes (Table 17).

**Table 17. Result of the analysis of the feeds (0 - 21 and 21 - 42 days).**

| | | **Feed 0-21 days (4 samples)** | | | | **Feed 21-42 days (4 samples)** | | | |
|---|---|---|---|---|---|---|---|---|---|
| **Parameter (%)** | **Method** | **T1** | **T2** | **T3** | **T4** | **T1** | **T2** | **T3** | **T4** |
| Humidity | Gravimetry | 10.81 | 10.8 | 11.03 | 10.92 | 10.79 | 10.74 | 10.57 | 10.44 |
| Ashes | Gravimetry | 5.73 | 5.58 | 6.93 | 5.61 | 5.2 | 5.27 | 6.11 | 5.15 |
| Total fat | Soxhlet | 7.94 | 8.26 | 8.2 | 8.39 | 9.01 | 8.99 | 8.33 | 8.87 |
| Crude fiber | Gravimetry | 3.6 | 3.9 | 4 | 4.1 | 3.5 | 3.56 | 3.97 | 4.12 |
| Crude protein | Kjeldahl | 20.78 | 20.75 | 20.98 | 20.96 | 19.66 | 19.43 | 19.89 | 19.95 |

### Example 5. In vivo experiments

### I. Experimental protocols:

### a) Experimental animals and housing:

160 Cobb broilers (males and females) of 1 day of life, with a mean weight of 39 g, were employed, which were distributed into 16 cages with 10 broilers/cage based on the weight. The test is performed in a conditioned room (clean and disinfected with temperature control and photoperiod), with availability of water and feed ad libitum. With the aim of preventing the effect of temperature differences, air currents, etc., the distribution of the treatments was performed by blocking the room.
There were two periods, start and growth, each of them with 4 different treatments. Each treatment was repeated 4 times and each repetition was formed by 10 broilers housed in the same cage. The cages had the dimensions described in Table 18.

**Table 18: Experimental housings**

| Age | Size (cm) |
|---|---|
| 1-21 d | 110x63x33 |
| 21-42 d | 99x90x41.6 |

### b) Controls:

During the course of the test the following controls were performed:
i) Productive parameters: the number of animals/cage and the live weight at 0, 21 and 42 days, the intake of feed/cage and conversion rate of the periods 0-21, 21-42 and 0-42 days were recorded (Tables 19 - 25).
ii) Microbiological analyses and intestinal histology: at the end of each study period one broiler per cage was slaughtered, to evaluate the intestinal flora of the ileum and blind gut (Table 26) and the status of the duodenal, jejunal and ileum epithelium (Tables 27 - 33).
iii) Mortality: a daily assessment of mortality was carried out throughout the test, writing down the deaths with the number of the corresponding cage and the animal weight (Table 34).

### II. Results

### i) Productive parameters

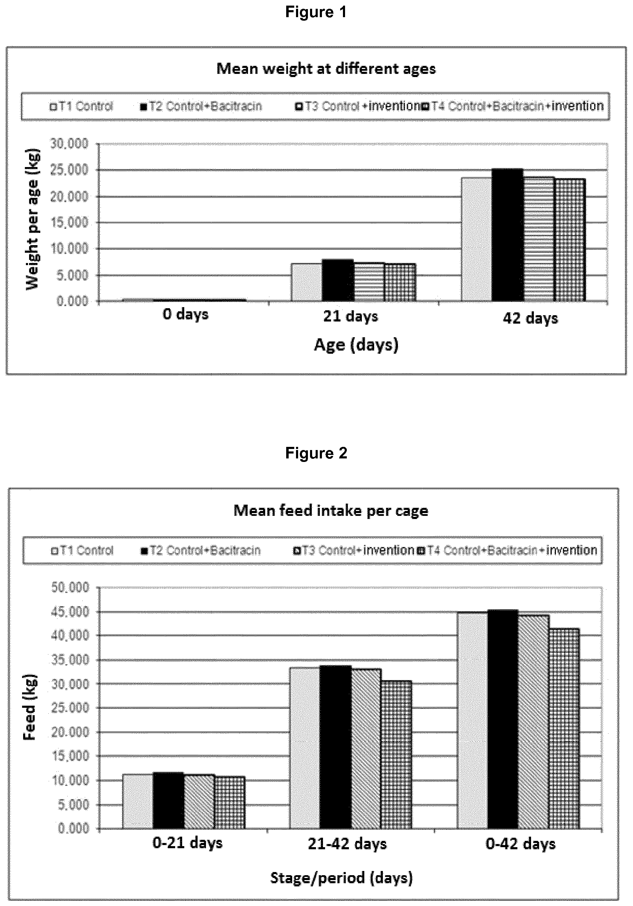

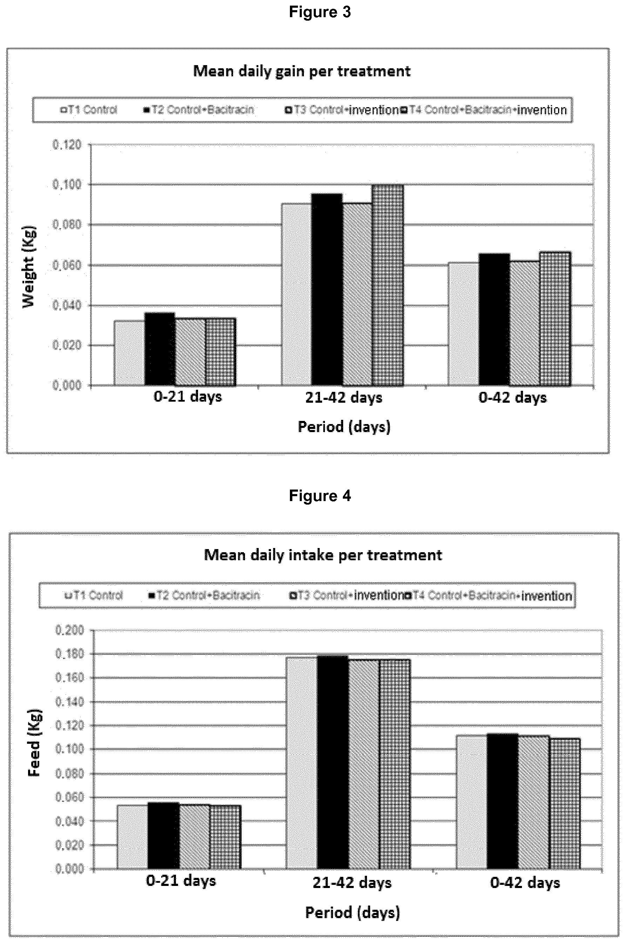

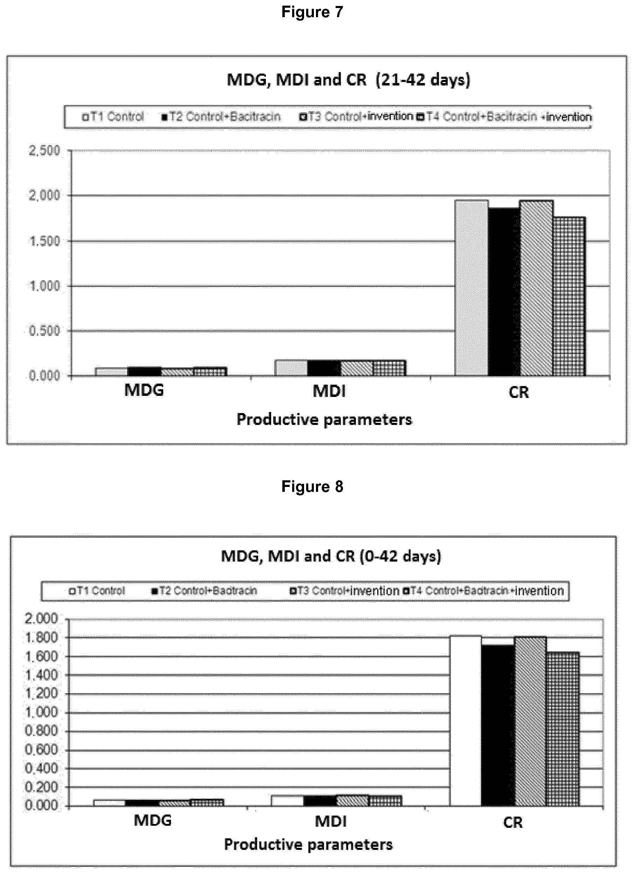

A number of controls are performed: no. of broilers, live weights, feed intake, mean daily gain (MDG), mean daily intake (MDI), and conversion rate (CR= mean daily intake/mean daily gain), all of this per cage, recording the data obtained as noted in Tables 19 - 25 and Figures 1 - 8.

The statistical analysis is a variance analysis using a GLM (generalized lineal model) method in the SPSS software (IBM, Statistical Package for the Social Sciences) with the initial weight as covariate. The SEM is calculated as squared root of the mean squared error (MSE) divided by the squared root of the number of repetitions (n) per treatment (4 in our case). With regard to the P, it is a variance analysis called F test. It calculates the variation between sample means and the variation between individuals of the same sample. Its ratio is F, which is a statistic and based on the value it indicates if the null or the alternative hypothesis (that the different treatments are equal or different) is true.

**Table 19: Mean live weight/cage (kg) (mean values)**

| Treatment | 0 days | 21 days | 42 days |
|---|---|---|---|
| T1 (control) | 0.391 | 7.131 | 23.550 |
| T2 (control+bacitracin) | 0.395 | 7.994 | 25.263 |
| T3 (control+invention) | 0.392 | 7.324 | 23.693 |
| T4 (control+bacitrac+invention) | 0.392 | 7.176 | 23.345 |

**Table 20. Mean intake/cage (kg) (mean values)**

| Treatment | 0-21 days | 21-42 days | 0-42 days |
|---|---|---|---|
| T1 (control) | 11.240 | 33.410 | 44.650 |
| T2 (control+bacitracin) | 11.608 | 33.708 | 45.315 |
| T3 (control+invention) | 11.170 | 33.133 | 44.303 |
| T4 (control+bacitrac+invention) | 10.868 | 30.693 | 41.560 |

In both stages the highest live weights occur in T2 (control feed + bacitracin) and are directly proportional to the feed intake.

**Table 21: Weight per broiler (g) (mean values)**

| Treatment | 0 days | 21 days | 42 days |
|---|---|---|---|
| T1 (control) | 39.1 | 715.6 | 2621.8 |
| T2 (control+bacitracin) | 39.5 | 794.3 | 2796.7 |
| T3 (control+invention) | 39.2 | 734.4 | 2636.6 |
| T4 (control+bacitrac+invention) | 39.2 | 734.5 | 2825.9 |
| SEM (n=4) | 0.23 | 27.49 | 72.73 |
| P | 0.6581 | 0.3024 | 0.1718 |

| | | | |
|---|---|---|---|
| SEM: standard error of the mean (n: number of observations) P: probability | | | |

**Table 22: Mean daily gain/cage (mdg, kg) (mean values)**

| Treatment | 0-21 days | 21-42 days | 0-42 days |
|---|---|---|---|
| T1 (control) | 0.0321 | 0.0906 | 0.0614 |
| T2 (control+bacitracin) | 0.0362 | 0.0956 | 0.0659 |
| T3 (control+invention) | 0.0330 | 0.0905 | 0.0617 |
| T4 (control+bacitrac+invention) | 0.0331 | 0.0996 | 0.0663 |

**Table 23: Mean daily intake/cage (mdi, kg) (mean values)**

| Treatment | 0-21 days | 21-42 days | 0-42 days |
|---|---|---|---|
| T1 (control) | 0.0535 | 0.1768 | 0.1119 |
| T2 (control+bacitracin) | 0.0553 | 0.1783 | 0.1136 |
| T3 (control+invention) | 0.0532 | 0.1753 | 0.1110 |
| T4 (control+bacitrac+invention) | 0.0527 | 0.1753 | 0.1087 |

**Table 24: Conversion rate/cage (mean values)**

| Treatment | 0-21 days | 21-42 days | 0-42 days |
|---|---|---|---|
| T1 (control) | 1.6740 | 1.9552 | 1.8267 |
| T2 (control+bacitracin) | 1.5291 | 1.8691 | 1.7252 |
| T3 (control+invention) | 1.6150 | 1.9451 | 1.8037 |
| T4 (control+bacitrac+invention) | 1.6027 | 1.7604 | 1.6387 |

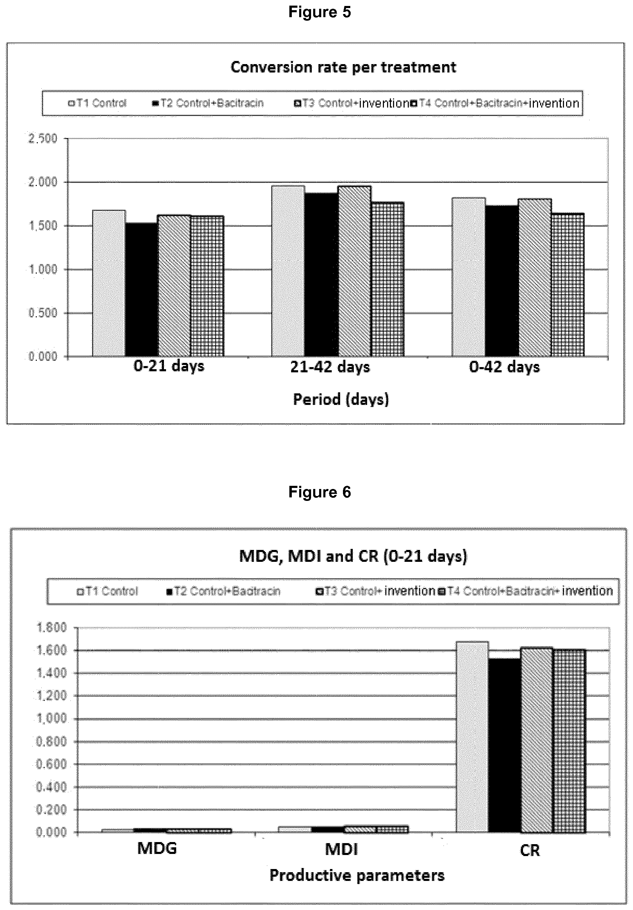

The best results are observed in the animals receiving treatment T2 and T4. Those of T2 in the first stage and those of T4 in the second stage and in the global period. These animals show a lower conversion rate, indicating a higher mean daily gain with the lowest feed intake (Figures 6, 7 and 8)

**Table 25: Mean daily gain (mdg, g), Mean daily intake (mdi, g) and Conversion rate (ic) per cage (mean values)**

| Treatment | 0-21 days | | | 21-42 days | | | 0-42 days | | |
|---|---|---|---|---|---|---|---|---|---|
| Variable | gmd | cmd | ic | gmd | cmd | ic | gmd | cmd | ic |
| T1 | 32.2 | 53.7 | 1.67 | 90.8 | 177.9 | 1.97 | 61.5 | 115.8 | 1.89 |
| T2 | 36.0 | 54.9 | 1.53 | 95.4 | 176.2 | 1.85 | 65.7 | 115.6 | 1.76 |
| T3 | 33.1 | 53.3 | 1.62 | 90.6 | 176.2 | 1.95 | 61.8 | 114.7 | 1.86 |
| T4 | 33.1 | 52.7 | 1.60 | 99.6 | 175.2 | 1.76 | 66.3 | 113.9 | 1.72 |
| EEM (n=4) | 1.31 | 0.91 | 0.054 | 3.02 | 2.46 | 0.051 | 1.73 | 1.49 | 0.042 |
| P | 0.3024 | 0.4193 | 0.3838 | 0.1774 | 0.8913 | 0.0518 | 0.1718 | 0.8092 | 0.0499 |

| | | | | | | | | | |
|---|---|---|---|---|---|---|---|---|---|
| mdg: mean daily gain (g/d) mdi: mean daily intake (g/d) ic: conversion rate (g/g) SEM: standard error of the mean (n: number of observations) P: probability | | | | | | | | | |

With regard to the productive parameters there is a statistically significant difference in the Cl of the period 0 - 42 days with a P value lower than 0.05, and a trend to significance in the Cl of the second period (21 - 42 days) with a P value between 0.05 and 0.12.

### ii) Microbiological analysis and intestinal histology

On Days 21 and 42 of the test a broiler from each of the cages is slaughtered and samples of intestinal content of the ileum and blind gut are taken to evaluate the intestinal flora (Tables 26 and 27), as well as a portion of intestinal mucosa of the duodenum (Tables 28 and 29), jejunum (Tables 30 and 31) and ileum (Tables 32 and 33) to evaluate the epithelium by measuring the length of intestinal villi.

**Table 26. Microbiological counts (mean values) of the intestinal flora (0 - 21 days).**

| | **21 days** | | | | | |
|---|---|---|---|---|---|---|
| | **Ileum** | | | **Blind gut** | | |
| Treatment | Lactobacillus | Coliforms | *E. coli* | Lactobacillus | Coliforms | *E. coli* |
| T1 | 4.34E+08 | 6.05E+06 | 5.02E+06 | 1.33E+10 | 1.17E+09 | 1.17E+09 |
| T2 | 1.39E+07 | 4.00E+06 | 3.62E+06 | 1.42E+08 | 2.03E+09 | 2.03E+09 |
| T3 | 1.14E+08 | 1.29E+06 | 4.63E+05 | 1.81E+10 | 4.51E+08 | 4.18E+08 |
| T4 | 1.86E+07 | 2.13E+06 | 1.27E+06 | 2.27E+08 | 1.23E+09 | 1.03E+09 |
| EEM (n=4) | 1.33E+08 | 1.41E+06 | 1.28E+06 | 6.33E+09 | 6.39E+08 | 5.92E+08 |
| P | 0.1382 | 0.1352 | 0.0932 | 0.1524 | 0.4177 | 0.3332 |

| | | | | | | |
|---|---|---|---|---|---|---|
| SEM: standard error of the mean (n: number of observations) P: probability | | | | | | |

**Table 27. Microbiological counts (mean values) of the intestinal flora (21 - 42 days).**

| | **42 days** | | | | | |
|---|---|---|---|---|---|---|
| | **Ileum** | | | **Blind gut** | | |
| Treatment | Lactobacillus | Coliforms | *E. coli* | Lactobacillus | Coliforms | *E. coli* |
| T1 | 7.10E+08 | 1.44E+06 | 1.08E+06 | 2.93E+08 | 1.06E+08 | 9.43E+07 |
| T2 | 1.02E+09 | 8.15E+06 | 4.88E+06 | 2.18E+08 | 1.23E+08 | 1.16E+08 |
| T3 | 1.33E+09 | 3.79E+05 | 3.39E+05 | 5.45E+08 | 1.07E+08 | 9.48E+07 |
| T4 | 4.61E+08 | 5.27E+05 | 4.87E+05 | 2.84E+08 | 4.08E+07 | 2.56E+07 |
| EEM (n=4) | 3.13E+08 | 4.18E+06 | 2.42E+06 | 1.30E+08 | 3.89E+07 | 3.90E+07 |
| P | 0.2811 | 0.5433 | 0.5418 | 0.3401 | 0.4815 | 0.4176 |

| | | | | | | |
|---|---|---|---|---|---|---|
| SEM: standard error of the mean (n: number of observations) P: probability | | | | | | |

The microbiological counts of salmonella are not shown in Tables 26 and 27 because, in all cases, in the plates corresponding to the lowest dilution analyzed, (10¹) there was no growth. With regard to microbiology there is only a trend to significance in the count of *E*. *coli* in the sample of ileum of 21 days of T4 with a P value of 0.05-0.12. With the composition of the invention a better control of pathogenic bacteria/possible pathogens is achieved, specifically *E*. *coli* and coliforms.

**Table 28. Duodenal epithelium, 21 days (mean values).**

| Treatment | Villus (µm) | Crypt (µm) | ratio v/c | Thickness of the mucosa (µm) | Villi (mm) | Crypts (mm) |
|---|---|---|---|---|---|---|
| T1 | 1108 | 215 | 5.22 | 1323 | 4.14 | 14.91 |
| T2 | 1219 | 200 | 6.08 | 1419 | 4.33 | 17.40 |
| T3 | 1042 | 210 | 5.12 | 1252 | 4.69 | 17.48 |
| T4 | 1139 | 212 | 5.49 | 1351 | 4.81 | 19.51 |
| SEM (n=4) | 105.4 | 14.1 | 0.641 | 104.9 | 0.762 | 3.258 |
| P | 0.6997 | 0.8835 | 0.7237 | 0.7341 | 0.9154 | 0.8013 |

| | | | | | | |
|---|---|---|---|---|---|---|
| SEM: standard error of the mean (n: number of observations) P: probability | | | | | | |

**Table 29: Duodenal epithelium, 42 days (mean values).**

| Treatment | Villus (µm) | Crypt (µm) | Thickness of the mucosa (µm) | Villi (mm) | Crypts (mm) |
|---|---|---|---|---|---|
| T1 | 904.33 | 246.48 | 1150.82 | 4.61 | 23.42 |
| T2 | 859.03 | 247.08 | 1106.10 | 3.92 | 22.09 |
| T3 | 683.22 | 232.29 | 867.62 | 2.75 | 23.43 |
| T4 | 601.20 | 219.76 | 776.27 | 2.18 | 20.42 |

**Table 30: Jejunal epithelium, 21 days (mean values).**

| Treatment | Villus (µm) | Crypt (µm) | ratio v/c | Thickness of the mucosa (µm) | Villi (mm) | Crypts (mm) |
|---|---|---|---|---|---|---|
| T1 | 798 | 202 | 3.95 | 1000 | 5.55 | 17.98 |
| T2 | 831 | 195 | 4.18 | 1026 | 5.28 | 17.57 |
| T3 | 765 | 238 | 3.19 | 1003 | 4.09 | 17.50 |
| T4 | 780 | 189 | 4.14 | 970 | 3.70 | 18.67 |
| SEM (n=4) | 123.5 | 23.8 | 0.348 | 144.0 | 0.783 | 1.803 |
| P | 0.9835 | 0.4927 | 0.2060 | 0.9941 | 0.3123 | 0.9654 |

| | | | | | | |
|---|---|---|---|---|---|---|
| SEM: standard error of the mean (n: number of observations) P: probability | | | | | | |

**Table 31: Jejunal epithelium, 42 days (mean values).**

| Treatment | Villus (µm) | Crypt (µm) | Thickness of the mucosa (µm) | Villi (mm) | Crypts (mm) |
|---|---|---|---|---|---|
| T1 | 545.96 | 214.36 | 760.32 | 4.47 | 18.71 |
| T2 | 485.16 | 197.81 | 682.97 | 6.15 | 15.18 |
| T3 | 537.43 | 254.67 | 738.46 | 7.69 | 14.24 |
| T4 | 752.75 | 206.29 | 959.03 | 6.58 | 17.17 |

**Table 32: Ileum epithelium, 21 days (mean values).**

| Treatment | Villus (µm) | Crypt (µm) | ratio v/c | Thickness of the mucosa (µm) | Villi (mm) | Crypts (mm) |
|---|---|---|---|---|---|---|
| T1 | 424 | 177 | 2.40 | 601 | 4.70 | 16.06 |
| T2 | 480 | 171 | 2.75 | 650 | 4.76 | 15.18 |
| T3 | 468 | 172 | 2.73 | 640 | 4.90 | 14.44 |
| T4 | 496 | 187 | 2.70 | 683 | 5.23 | 16.64 |
| SEM (n=4) | 57.1 | 16.8 | 0.177 | 71.6 | 0.817 | 1.164 |
| P | 0.8345 | 0.8987 | 0.4992 | 0.8802 | 0.9684 | 0.5723 |

| | | | | | | |
|---|---|---|---|---|---|---|
| SEM: standard error of the mean (n: number of observations) P: probability | | | | | | |

**Table 33: Ileum epithelium, 42 days (mean values).**

| Treatment | Villus (µm) | Crypt (µm) | Thickness of the mucosa (µm) | Villi (mm) | Crypts (mm) |
|---|---|---|---|---|---|
| T1 | 486.93 | 182.63 | 669.56 | 6.37 | 20.63 |
| T2 | 463.58 | 163.80 | 627.38 | 5.55 | 16.04 |
| T3 | 719.76 | 201.85 | 921.61 | 5.18 | 21.79 |
| T4 | 589.49 | 219.46 | 808.95 | 4.57 | 19.73 |
| **SEM** | 57.1 | 18.9 | 60.4 | 0,528 | 2,787 |
| **P** | **0.0306** | 0.2360 | **0.0182** | 0.1628 | 0.5208 |

At 42 days a trend to significance is seen in the thickness of the jejunal mucosa (P 0.05-0.12) and statistically significant differences in the villus and the thickness of the ileum mucosa (P < 0.05).
Considering the productive parameters analyzed, it can be concluded that the antibiotic and the composition made by the method of the invention improve the productive parameters in broilers and that the combination of both results in even more satisfactory results, as the groups of animals fed with this treatment (T4) yielded lower conversion rates (higher mean daily gain with lower feed intake).

## Claims

1. Method of synthesis of compositions for animal feeding based at least on an organic acid salt, protected with at least a soap, in a double reaction which comprises two stages:
a) Stage 1:
a.1) Mix in a compartment of the reactor at least one organic acid in stoichiometric ratio with at least a base or with at least an oxide.
a.2) Stir the mixture obtained in step a.1).
a.3) Remove the water resulting in the mixing process until at least a dry organic acid salt is obtained
b) Stage 2:
b.1) Add onto the organic acid salt obtained in Stage 1 at least fat and/or at least one fatty acid in stoichiometric ratio with the base(s) or with the oxide(s) of said Stage 1.
b.2) Stir the mixture obtained in step b.1).
b.3) Remove the water resulting in the mixing process until at least an organic acid salt protected with at least a soap is obtained.

2. Method according to claim 1 **characterized in that** the organic acids are selected from any of the list: formic, lactic, propionic, butyric, valerianic, benzoic, caprylic or capric.

3. Method according to any of claims 1 or 2 **characterized in that** the organic acid salts are selected from any of the following: sodium, calcium, copper and potassium.

4. Method according to any of claims 1-3 **characterized in that** the used base is sodium hydroxide and the used oxide is calcium oxide.

5. Method according to any of claims 1-4 **characterized in that** the fats and/or fatty acids used for the synthesis of the soap are selected from fats of animal origin, fats of vegetable origin, synthetic fats or mixture thereof.

6. Method according to claim 5 **characterized in that** the fats and/or fatty acids of vegetable origin are fats consisting of palm oil fatty acids or of lauric acid.

7. Method according to claim 1 **characterized in that** the mixture obtained in step a.2) of Stage 1 is kept under stirring at a speed of 200-600 rpm for a period from 1 to 15 minutes and at a temperature from 70 to 160 °C.

8. Method according to claim 1 **characterized in that** in step a.3) of Stage 1 the removal of water is performed by evaporation at a temperature of 80-130 °C.

9. Method according to claim 1 **characterized in that** the mixture obtained in step b.2) of Stage 2 is kept under stirring at a speed of 1500-3000 rpm for a period of 30 seconds to 10 minutes and at a temperature from 80 to 130 °C.

10. Method according to claim 1 **characterized in that** in step b.3) of Stage 2 the removal of water is performed by evaporation at a temperature of 80-130 °C.

11. Method according to claim 1 **characterized in that** the organic acid salt protected with the soap is kept under stirring between 1-5 minutes at a speed of 200-600 rpm and supplementing the stirring with intensifier turbines and lump crushers working at ranges in the order of 1500-3000 rpm.

12. Method according to any of claims 1-11 **characterized in that** the ratio in which the organic acid salts are found in the final product vary from 10 to 90 wt% of the final product and/or the ratio in which the soaps are found in the final product varies from 90 to 10 wt% of the final product.

## Patentansprüche

1. Verfahren zur Synthese von Zusammensetzungen zur Tierfütterung, basierend auf mindestens einem mit mindestens einer Seife geschützten Salz einer organischen Säure, mittels einer Doppelreaktion, die zwei Stufen umfasst:
a) Stufe 1:
a.1) Mischen mindestens einer organischen Säure im stöchiometrischen Verhältnis mit mindestens einer Base oder mindestens einem Oxid in einer Kammer des Reaktors,
a.2) Rühren des in Schritt a.1) erhaltenen Gemischs,
a.3) Entfernen des beim Mischprozess entstehenden Wassers bis mindestens ein trockenes Salz der organischen Säure erhalten wird,
b) Stufe 2:
b.1) Zugabe von mindestens einem Fett und/oder mindestens einer Fettsäure im stöchiometrischen Verhältnis bezüglich der/den Base(n) oder des/den Oxid(en) aus Stufe 1 zum in Stufe 1 erhaltenen Salz der organischen Säure,
b.2) Rühren des in Schritt b.1) erhaltenen Gemischs,
b.3) Entfernen des beim Mischprozess entstehenden Wassers bis mindestens ein mit mindestens einer Seife geschütztes Salz der organischen Säure erhalten wird.

2. Verfahren nach Anspruch 1, **dadurch gekennzeichnet, dass** die organischen Säuren aus folgender Liste ausgewählt werden: Ameisen-, Milch-, Propion-, Butter-, Valerian-, Benzoe-, Capryl- oder Caprinsäure.

3. Verfahren nach einem der Ansprüche 1 oder 2, **dadurch gekennzeichnet, dass** die Salze der organischen Säuren aus folgender Liste ausgewählt werden: Natrium, Calcium, Kupfer und Kalium.

4. Verfahren nach einem der Ansprüche 1 bis 3, **dadurch gekennzeichnet, dass** die verwendete Base Natriumhydroxid ist und das verwendete Oxid Calciumoxid ist.

5. Verfahren nach einem der Ansprüche 1 bis 4, **dadurch gekennzeichnet, dass** die für die Synthese der Seife verwendeten Fette und/oder Fettsäuren aus Fetten tierischen Ursprungs, Fetten pflanzlichen Ursprungs, synthetischen Fetten oder Mischungen davon ausgewählt werden.

6. Verfahren nach Anspruch 5, **dadurch gekennzeichnet, dass** die Fette und/oder Fettsäuren pflanzlichen Ursprungs Fette sind, die aus Palmölfettsäuren oder Laurinsäure bestehen.

7. Verfahren nach Anspruch 1, **dadurch gekennzeichnet, dass** das in Schritt a.2) der Stufe 1 erhaltene Gemisch mit einer Geschwindigkeit von 200 bis 600 UpM über einen Zeitraum von 1 bis 15 Minuten und bei einer Temperatur von 70 bis 160 °C gerührt wird.

8. Verfahren nach Anspruch 1, **dadurch gekennzeichnet, dass** die Entfernung des Wassers in Schritt a.3) der Stufe 1 durch Verdampfung bei einer Temperatur von 80 bis 130 °C erfolgt.

9. Verfahren nach Anspruch 1, **dadurch gekennzeichnet, dass** das in Schritt b.2) der Stufe 2 erhaltene Gemisch mit einer Geschwindigkeit von 1500 bis 3000 UpM über einen Zeitraum von 30 Sekunden bis 10 Minuten und bei einer Temperatur von 80 bis 130 °C gerührt wird.

10. Verfahren nach Anspruch 1, **dadurch gekennzeichnet, dass** die Entfernung des Wassers in Schritt b.3) der Stufe 2 durch Verdampfung bei einer Temperatur von 80 bis 130 °C erfolgt.

11. Verfahren nach Anspruch 1, **dadurch gekennzeichnet, dass** das mit der Seife geschützte Salz einer organischen Säure 1 bis 5 Minuten lang bei einer Geschwindigkeit von 200 bis 600 UpM gerührt wird, wobei das Rühren durch verstärkende Turbinen und Klumpenbrecher ergänzt wird, die im Bereich von 1500 bis 3000 UpM arbeiten.

12. Verfahren nach einem der Ansprüche 1 bis 11, **dadurch gekennzeichnet, dass** das Verhältnis, in dem die Salze der organischen Säuren im Endprodukt vorliegen, zwischen 10 und 90 Gew.-%, bezogen auf das Endprodukt, variiert und/oder dass das Verhältnis, in dem die Seifen im Endprodukt vorliegen, zwischen 90 und 10 Gew.-%, bezogen auf das Endprodukt, variiert.

## Revendications

1. Procédé de synthèse de compositions pour l'alimentation des animaux à base d'au moins un sel d'acide organique, protégé par au moins un savon, dans une double réaction qui comprendre deux phases :
a) Phase 1 :
a.1) Mélanger dans un compartiment du réacteur au moins un acide organique dans un rapport stoechiométrique avec au moins une base ou avec au moins un oxyde ;
a.2) Agiter le mélange obtenu dans l'étape a.1);
a.3) Retirer l'eau produite durant le processus de mélange jusqu'à l'obtention d'au moins un sel d'acide organique sec ;
b) Phase 2 :
b.1) Ajouter sur le sel d'acide organique obtenu dans la Phase 1 au moins de la graisse et/ou au moins un acide gras dans un rapport stoechiométrique avec la/les base(s) ou avec l'/les oxyde(s) de ladite Phase 1 ;
b.2) Agiter le mélange obtenu dans l'étape b.1);
b.3) Retirer l'eau produite durant le processus de mélange jusqu'à l'obtention d'au moins un sel d'acide organique protégé par au moins un savon.

2. Procédé selon la revendication 1, **caractérisé en ce que** les acides organiques sont sélectionnés parmi ceux figurant dans cette liste : formique, lactique, propionique, butyrique, valérianique, benzoïque, caprylique ou caprique.

3. Procédé selon l'une quelconque des revendications 1 ou 2, **caractérisé en ce que** les sels d'acide organique sont sélectionnés parmi ceux figurant dans la liste suivante : sodium, calcium, cuivre et potassium.

4. Procédé selon l'une quelconque des revendications 1-3, **caractérisé en ce que** la base utilisée est de l'hydroxyde de sodium et l'oxyde utilisé est de l'oxyde de calcium.

5. Procédé selon l'une quelconque des revendications 1-4, **caractérisé en ce que** les graisses et/ou les acides gras utilisés pour la synthèse du savon sont sélectionnés parmi des graisses d'origine animale, des graisses d'origine végétale, des graisses synthétiques ou leur mélange.

6. Procédé selon la revendication 5, **caractérisé en ce que** les graisses et/ou les acides gras d'origine végétale sont des graisses constituées des acides gras d'huile de palme ou de l'acide laurique.

7. Procédé selon la revendication 1, **caractérisé en ce que** le mélange obtenu dans l'étape a.2) de la Phase 1 est maintenu en agitation à une vitesse de 200-600 tr/min pendant 1 à 15 minutes et à une température allant de 70 à 160°C.

8. Procédé selon la revendication 1, **caractérisé en ce que** dans l'étape a.3) de la Phase 1, le retrait de l'eau est réalisé par évaporation à une température de 80-130°C.

9. Procédé selon la revendication 1, **caractérisé en ce que** le mélange obtenu dans l'étape b.2) de la Phase 2 est maintenu en agitation à une vitesse de 1500-3000 tr/min pendant 30 secondes à 10 minutes et à une température allant de 80 à 130°C.

10. Procédé selon la revendication 1, **caractérisé en ce que** dans l'étape b.3) de la Phase 2, le retrait de l'eau est réalisé par évaporation à une température de 80-130°C.

11. Procédé selon la revendication 1, **caractérisé en ce que** le sel d'acide organique protégé par le savon est maintenu en agitation entre 1 et 5 minutes à une vitesse de 200-600 tr/min, l'agitation étant complétée par des turbines d'intensification et des broyeurs de grumeaux fonctionnant dans des gammes de l'ordre de 1500-3000 tr/min.

12. Procédé selon l'une quelconque des revendications 1-11, **caractérisé en ce que** le rapport dans lequel les sels d'acide organique sont trouvés dans le produit final varie de 10 à 90% en poids du produit final et/ou le rapport dans lequel les savons sont trouvés dans le produit final varie de 90 à 10% en poids du produit final.
